# EUROPEAN PATENT APPLICATION

(11) **EP 4 503 547 A1**
(43) Date of publication of application: **05.02.2025**
(21) Application number: 23780267.3
(22) Date of filing: 24.03.2023
(51) Int. Cl.: H04L 43/06, H04L 12/22, H04L 12/28

(54) **PROCESSING DEVICE, PROCESSING METHOD, AND PROCESSING PROGRAM**

(30) Priority: 28.03.2022 JP 2022051813
(71) Applicant: NTT Communications Corporation, Tokyo 100-8019 (JP)
(72) Inventor: MINAKUCHI, Toru, Tokyo 100-8019 (JP); MATSUSHIMA, Keisuke, Tokyo 100-8019 (JP); KAJITANI, Junichi, Tokyo 100-8019 (JP)
(74) Representative: Hoffmann Eitle
(86) International application number: PCT/JP2023/012026
(87) International publication number: WO 2023/190257

(57) **Abstract**

A processing device (10) includes a collector (132) configured to collect communication data of an OT (Operational Technology) network; a receiver (131) configured to information presenting a business type and a scale of a business facility in which the OT network is built; a specifying unit (133) configured to specify a communication environment of the OT network based on the communication data; an evaluator (135) configured to make an evaluation; and a generator (136) configured to generate a report presenting a result of the evaluation made by the evaluator (135).

## Description

### [Technical Field]

The present invention relates to a processing device, a processing method, and a processing program.

### [Background Art]

In recent years, supports for universal OSs (Operating Systems), standardization of communication protocols, replacement with IPs (Internet Protocols), connection to the outside have been moved forward with respect to OT (Operational Technology) networks that are used to manage and control control systems of buildings, factories, plants, etc. This increases the risk that OT networks are at security risk.

For security measure on OT networks, a system that visualizes the communication status of an OT network, the connection status of terminal devices, and an OS that a terminal device uses, etc., has been proposed (refer to Non Patent Document 1) .

### [Citation List]

### [Non Patent Citation]

Non Patent Document 1: NTT Communications, Introduction of Security of Control System and Measure Technique OsecT (Pre-part), online, searched on 1st February, 2022, Internet <URL: https://engineers.ntt.com/entry/2021/07/27/112539>

### [Summary of Invention]

### [Technical Problem]

The system described in Non Patent Document 1 outputs a list of terminal devices in which IP addresses and used OSs are listed and a map presenting the communication status between the terminal devices.

An OT network however is often designed by a person in charge who is not so familiar with IT (Information Technology) and OT or is often managed by a person in charge who is not so familiar with IT and OT. It is difficult for such a person in charge to evaluate a communication environment and assume security risks even if the person looks at the list of terminal devices and the map resenting the communication status between the terminal devices.

The present invention was made in view of the above-described circumstances and an object of the present invention is to provide a processing device, a processing method, and a processing program that make it possible to easily recognize an evaluation on a communication environment of an OT network.

### [Solution to Problem]

In order to solve the above-described problems and achieve the object, a processing device according to the present invention includes: a collector configured to collect communication data of an OT (Operational Technology) network; an acquisition unit configured to acquire information presenting a business type and a scale of a business facility in which the OT network is built; a specifying unit configured to specify a communication environment of the OT network based on the communication data; an evaluator configured to make an evaluation on the communication environment of the OT network based on a reference value that is set according to the business type and the scale of the business facility; and a generator configured to generate a report presenting a result of the evaluation made by the evaluator.

### [Advantageous Effects of Invention]

According to the present invention, it is possible to easily recognize an evaluation on a communication environment of an OT network.

### [Brief Description of Drawings]

FIG. 1 is a block diagram illustrating an example of a configuration of a processing system according to an embodiment.
FIG. 2 is a block diagram illustrating an example of a configuration of a processing device illustrated in FIG. 1.
FIG. 3 is a diagram illustrating an example of a format that a report generation data contains.
FIG. 4 is a diagram illustrating an example of the data that specified data contains.
FIG. 5 is a diagram illustrating an example of data that specified data contains.
FIG. 6 is a diagram illustrating an example of a data configuration of evaluation data.
FIG. 7 is a diagram illustrating an example of report data.
FIG. 8 is a diagram illustrating an example of a detailed report.
FIG. 9 is a diagram illustrating an example of the detailed report.
FIG. 10 is a diagram illustrating an example of the detailed report.
FIG. 11 is a diagram illustrating an example of the detailed report.
FIG. 12 is a diagram illustrating an example of the detailed report.
FIG. 13 is a diagram illustrating an example of the detailed report.
FIG. 14 is a diagram illustrating an example of the detailed report.
FIG. 15 is a diagram illustrating an example of the detailed report.
FIG. 16 is a diagram illustrating an example of the detailed report.
FIG. 17 is a sequence chart illustrating an example of a process procedure of a processing method according to the embodiment.
FIG. 18 is a diagram illustrating a computer that executes a program.

### [Embodiments for Carrying Out the Invention]

An embodiment of a processing device, a processing method, and a processing program according to the present application will be described in detail below according to the drawings. Note that the embodiment does not limit the processing device, the processing method, and the processing program according to the present application.

As for the following embodiment, the processing device, the processing method, and a flow of a process of the processing program according to the embodiment will be described in order and an effect brought by the embodiment will be described last.

### Embodiment

First of all, the embodiment will be described. In the embodiment, a processing system that makes an evaluation on a communication environment of an OT (Operational Technology) network that is used to manage and control a control system in a business facility, such as a building, a factory, or a plant, and that generates a report presenting an evaluation result will be described.

### Configuration of Processing System

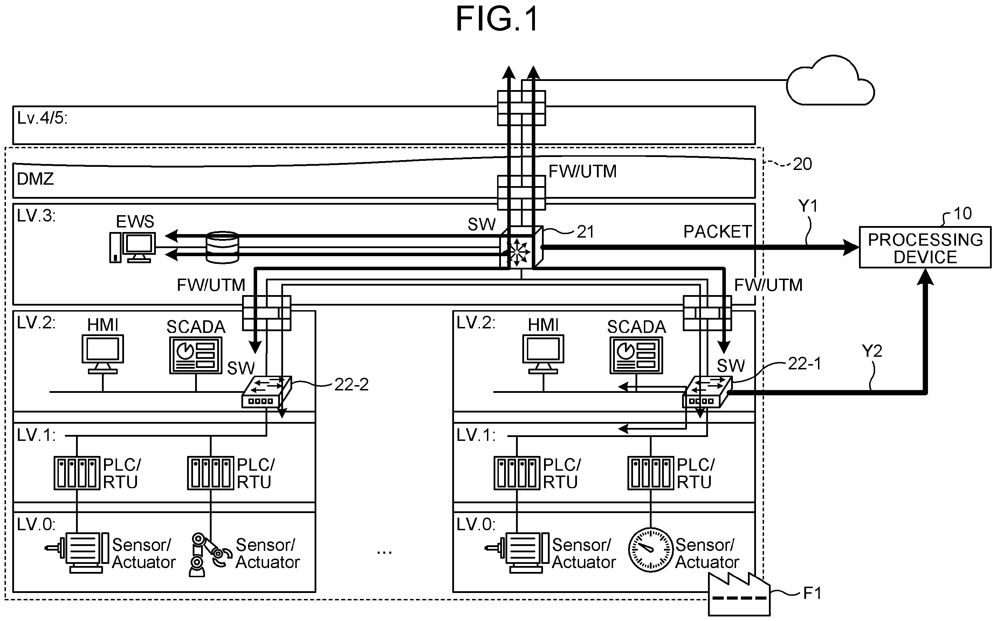

A configuration of a processing system according to the embodiment will be described. FIG. 1 is a schematic diagram illustrating an example of a configuration of the processing system of the embodiment. In the embodiment, an OT network 20 that is built in a factory F will be described as an example.

The OT network 20 illustrated in FIG. 1 is separated into a Lv.0 at which a sensor and an actuator are arranged, a Lv.1 at which a PLC (Programmable Logic Controller)/RTU (Remote Terminal Unit) is arranged, a Lv.2 at which switches (SW) 22-1 and 22-2, an SCADA (Supervisory Control And Data Acquisition) and an HMI (Human Machine Interface) are arranged, and a Lv.3 at which a SW 21 and an EWS (Engineering Workstation) are arranged. Each of the devices that are arranged at Lv.0 to Lv.3 is a communication devices capable of communicating with other devices. In the OT network 20, a DMZ (DeMilitarized Zone) is arranged between Lv.3 and a server (Lv.4/5) of a business operator capable of communicating with an external network.

A processing device 10 collects packet data of the OT network 20. In the processing system, for example, the SW 21 is provided with a mirror port and the packet data that the SW 21 transmits and receives (communication data) is mirrored to the processing device 10 (the arrow Y1 in FIG. 1).

The processing device 10 specifies a communication environment of the business facility based on the collected packet data of the OT network 20. The processing device 10 makes an evaluation on the communication environment of the OT network 20 based on a reference value that is set according to the business type and the scale of the business facility and generates a report presenting the result of the evaluation. By checking the report, even a person in charge who is not familiar with IT and OT is able to recognize the evaluation on the communication environment of the OT network 20 easily.

When the communication environment of the OT network 20 at or under Lv.2 is evaluated, for example, the SW 22-1 and SW 22-2 may be provided with a mirror port and report data that the SW 22-1 and SW 22-2 receive and transmits may be mirrored to the processing device 10 (the arrow Y2 in FIG. 1).

### Processing Device

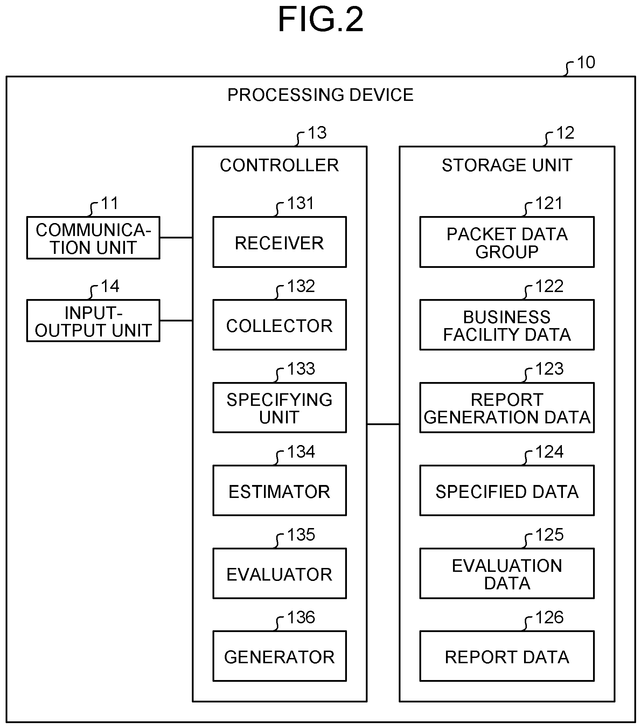

The processing device 10 will be described next. FIG. 2 is a block diagram illustrating an example of a configuration of the processing device 10 illustrated in FIG. 1. As illustrated in FIG. 2, the processing device 10 includes a communication unit 11 that controls communication relating to various types of information, a storage unit 12 that stores data and programs that are necessary for various types of processing performed by a controller 13, the controller 13 that executes various sets of processing, and an input-output unit 14.

The communication unit 11 is a communication interface that transmits and receives various types of information to and from other devices that are connected via a network, or the like. The communication unit 11 is realized by a NIC (Network Interface Card), or the like, and performs communication between other devices and the controller 13 (to be described below) via an electric communication line, such as a LAN (Local Area Network) or the Internet. For example, the communication unit 11 receives packet data from the SW 21.

The input-output unit 14 receives inputs of information and outputs information. The input-output unit 14 is a device, such as a mouse or a keyboard, that receives inputs of various types of instruction information to the processing device 10 in accordance with an input operation performed by a user. The input-output unit 14 is realized by, for example, a liquid crystal display and a screen of which display is controlled by the processing device 10 is output as a display to the input-output unit 14. The input-output unit 14 may be realized by, for example, a printer, or the like.

The storage unit 12 is a storage device, such as an HDD (Hard Disk Drive) or an SSD (Solid State Drive). The storage unit 12 may be a data-rewritable semiconductor memory, such as a RAM (Random Access Memory), a flash memory, or an NVSRAM (Non Volatile Static Random Access Memory). The storage unit 12 stores an OS (Operating System) and various types of programs that are executed by the processing device 10. Furthermore, the storage unit 12 stores various types of information used in execution of the programs. The storage unit 12 stores a packet data group 121, business facility data 122, report generation data 123, specified data 124, evaluation data 125, and report data 126.

The packet data group 121 is a plurality of sets of packet data that are mirrored from the SW 21 of the OT network 20. The packet data is collected during a period that is a subject of evaluation of the communication environment of the OT network 20.

The business facility data 122 contains data presenting the business type and the scale of each business facility. The business facility is, for example, assembling processing, chemistry, food, machine, electricity, information and communications, or the like. The business scale is the number of employees, the annual sales, or the like. The business facility data 122 is registered previously. The business facility data 122, for example, may be acquired from another databank.

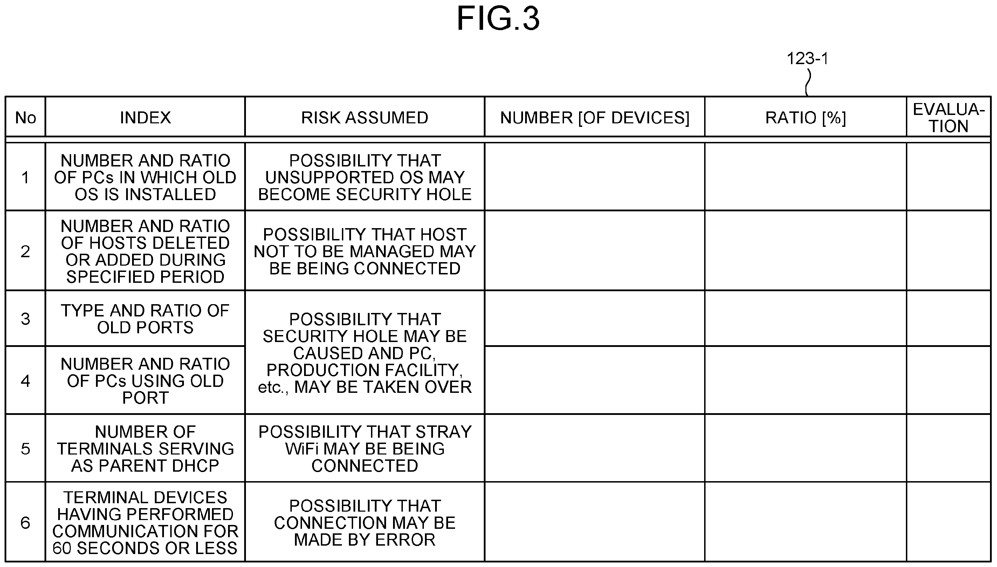

The report generation data 123 is data containing a format of a report for writing the evaluation on the communication environment of the OT network 20. FIG. 3 is a diagram illustrating an example of the format that the report generation data 123 contains.

As illustrated in Table 123-1 in FIG. 3, the report generation data 123 has an index, a risk to be assumed, a number, a ratio, and an evaluation as items. Among the items, each set of content written as an index is set previously. The content of the risk to be assumed is also set previously according to the written content of the index.

An index is content of an evaluation made by an evaluator 135 (to be described below) and relates to any one, some, or all of the number of communication devices of the OT network, a type of an OS that is used by the communication device, the number of communication devices in which an OS of a version older than a given version is installed, the number of hosts that are deleted and/or added during a specified period, a type and the number of ports that are used in the OT network, the number of communication devices having a DHCP (Dynamic Host Configuration Protocol) server function, and the number of communication devices having performed communication for a given time or less.

For example, an index "1"is "the number and the ratio of PCs (Personal Computers) in which an old OS is installed". An index "2" is "the number and the ratio of hosts that are deleted and/or added during a specified period". An index "3" is "a type and the ratio of old ports". An index "4" is "the number and the ratio of PCs using old ports". An index "5" is "the number of terminal devices serving as a parent DHCP (having a DHCP server function)". An index "6" is "terminal devices having performed communication for 60 seconds or less".

A risk of "a possibility that unsupported OS may become a security hole" is associated with the index "1". A risk of "a possibility that a host not to be managed may be being connected" is associated with the index "2". A risk of "a possibility that a security hole may be caused and a PC, a production facility, etc., may be taken over" is associated with the indices "3" and "4". A risk of "a possibility that a stray WiFi may be being connected" is associated with the index "5". A risk of "a possibility that connection may be made by error" is associated with the index "5".

In the items of the number, the ratio, and evaluation corresponding to each of the indices "1" to "6" in Table 123-1, information obtained by specification or evaluation by a specifying unit 133 (to be described below) and the evaluator 135 (to be described below) is written according to each of the indices.

The specified data 124 is data presenting the communication environment of the OT network 20 that is specified by the specifying unit 133. The specified data 124 contains various types of data, such as a list of communication devices of the OT network 20. For example, the list of communication devices of the OT network 20 is a list associating, for example, with respect to each communication device, an IP address, a MAC address (Media Access Control address), an OS, vender information, a role of the communication device (one of or both a client and a server), a protocol and a port number, identification information on a host, a time of observation of communication, etc., with one another.

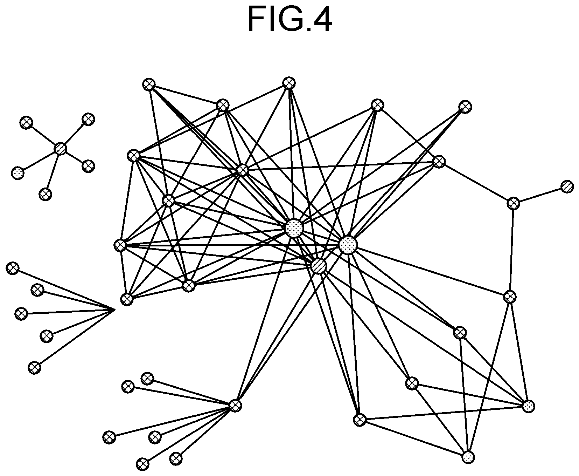

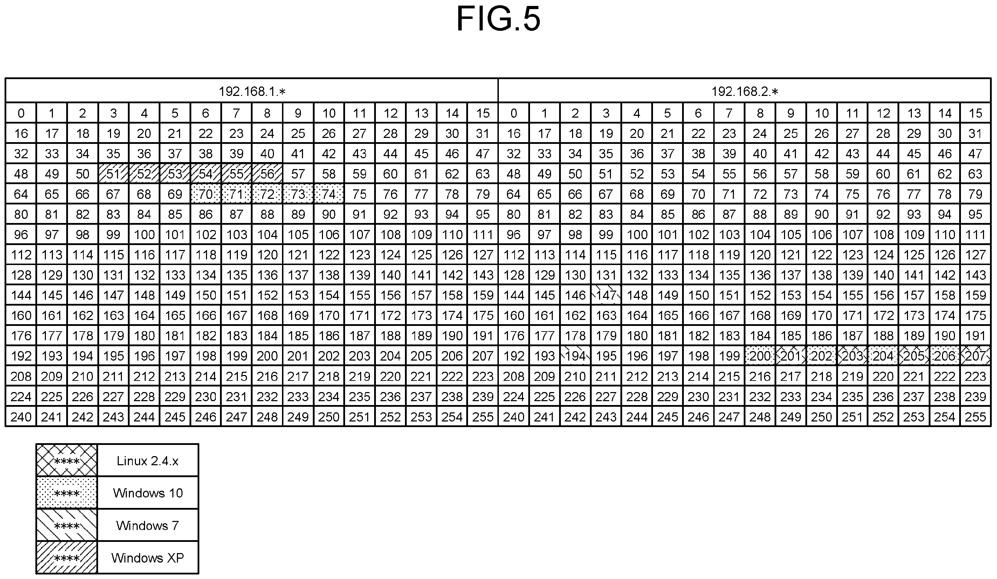

FIG. 4 and FIG. 5 are diagrams illustrating examples of data that the specified data 124 contains. As illustrated in FIG. 4, the specified data 124 contains map data that displays communications among communication devices by links using the communication devices as nodes. IP addresses are written together with the nodes. As illustrated in FIG. 5, the specified data 124 contains matrix data in which each cell is colored according to the vender information, the OS or the role of the communication device and that is configured in a matrix form.

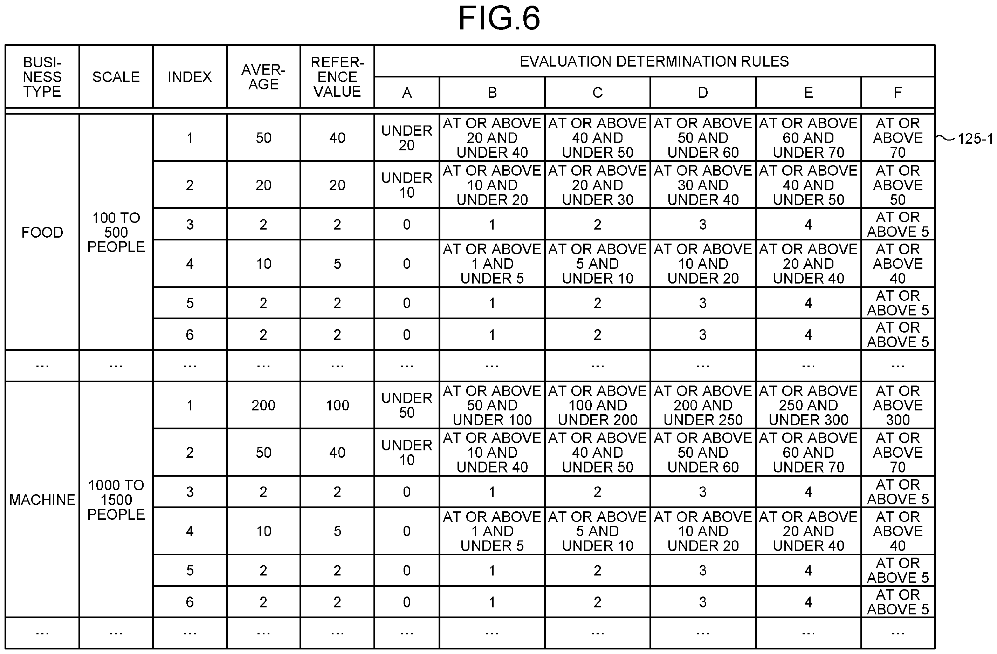

The evaluation data 125 is data presenting a reference value of each evaluation made by the evaluator 135. A reference value of each evaluation is set according to the business type and the scale of the business facility. FIG. 6 is a diagram illustrating an example of a data configuration of the evaluation data 125.

As illustrated in FIG. 6 and as presented in Table 125-1, the evaluation data 125 has a business type of a business facility, a scale, an index, an average, a reference value, and evaluation determination rules as items. The indices "1" to "6" correspond to the indices "1" to "6" in Table 125-1. The average is an average of the index presented in the row in a plurality of business facilities of the business type and the scale of the row. The reference value is set according to the business type of the business facility and the scale of the business facility with respect to each of the indices "1" to "6". The reference value is a value that is desirable to be met by a business facility of this business type and this scale.

In the embodiment, according to the business type and the scale of the business facility, an evaluation reference range is set according to each stage such that it is possible to make evaluations in stages in an order of evaluations A to F. Each evaluation reference range is set based on an average and a reference value of each index corresponding to each of the business type and the scale of the business facility.

The content of the first row of Table 125-1 will be described as an example. In the first row, an average of "50" and a reference value of "40" of the index "1" and evaluation determination rules for to a business facility whose business type is food and whose scale is 100 to 500 people are associated. The first row presents that Evaluation A applies to the case where "the number of PCs in which an old OS is installed" is "smaller than 20", Evaluation B applies to the case where it is "20 or larger and smaller than 40", Evaluation C applies to the case where it is "40 or larger and smaller than 50", Evaluation D applies to the case where it is "50 or larger and smaller than 60", Evaluation E applies to the case where it is "60 or larger and smaller than 70", and Evaluation F applies to the case where it is "70 or larger".

In the second row of Table 125-1, an average of "20" and a reference value of "20" of the index "2" and evaluation determination rules corresponding to A to F for a business facility whose business type is food and whose scale is 100 to 500 people are associated. In this manner, in Table 125-1, an average, a reference value, and respective evaluation determination rules corresponding to A to F are associated with respect to each of the indices "1" to "6".

In Table 125-1, for a business facility of another business type and another scale, an average, a reference value, and respective evaluation determination rules corresponding to A to F are associated with respect to each of the indices "1" to "6". An average and a reference value of each of the indices "1" to "6" and respective evaluation determination rules corresponding to A to F are set according to the business type and the scale and according to security levels each of which is requested. In the example in FIG. 6, the case where the reference value is different from the average is presented as an example; however, the reference value may be the same value as the average. The reference value may be a statistical value other than the average.

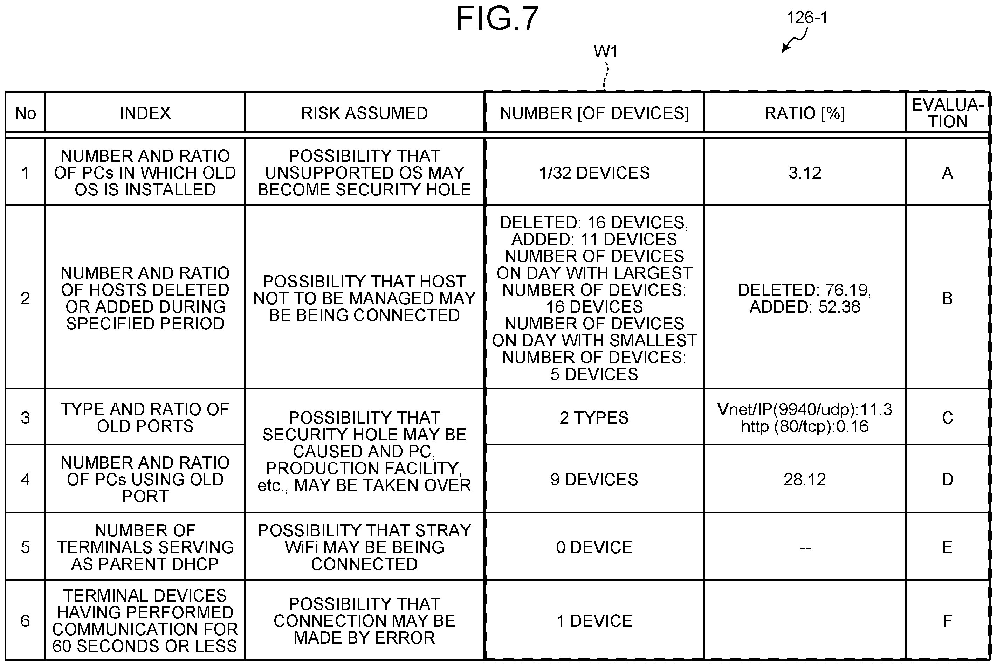

The report data 126 is a report presenting a result of an evaluation on the OT network 20 that is generated by a generator 136 (to be described below). FIG. 7 is a diagram illustrating an example of the report data 126. As illustrated in FIG. 7, Report 126-1 is obtained by writing the number and the ratio that correspond to each index and that are specified by the specifying unit 133 in the columns for the number and the ratio among the items in Table 123-1 in FIG. 3 and writing an evaluation made by the evaluator 135 on each index in the column of evaluation.

The controller 13 controls the entire processing device 10. The controller 13 is, for example, an electronic circuit, such as a CPU (Central Processing Unit) or an MPU (Micro Processing Unit), or an integrated circuit, such as an ASIC (Application Specific Integrated Circuit) or an FPGA (Field Programmable Gate Array). The controller 13 includes an internal memory for storing programs that define various types of process procedures and control data and executes each of the processes using the internal memory. The various types of programs run and accordingly the controller 13 functions as various types of processors. The controller 13 includes a receiver 131, a collector 132, the specifying unit 133, an estimator 134, the evaluator 135, and the generator 136.

The receiver 131 receives data that is input by a person who is in charge of managing the business facility in which the OT network 20 is built. For example, the receiver receives an input of information presenting the business type and the scale of the business operator in which the OT network 20 is set.

The collector 132 collects packet data that is mirrored from the SW 21 of the OT network 20 and stores the packet data in the storage unit 12.

The specifying unit 133 specifies a communication environment of the OT network 20 based on the packed data that is mirrored from the SW 21 of the OT network 20. The specifying unit 133 specifies, with respect to each communication device that is arranged in the OT network 20, an IP address, a MAC address, an OS, vender information, a role of the communication device (one of or both a client and a server), a protocol and a port number, identification information on a host, a transmitter and a receiver of communication, a time of observation of communication, etc. Based on the packet data, the specifying unit 133 specifies traffic between communication devices that are arranged in the OT network 20 and a type of the communication. The specifying unit 133, for example, specifies which communication terminal devices are executing a name resolution communication in between. The specifying unit 133 further specifies freely-selected two periods and specifies a change in the communication status.

Based on the packet data, the specifying unit 133 specifies any one, some, or all of the number of communication devices of the OT network, a type of an OS that is used by the communication device, the number of communication devices in which an OS of a version older than the given version is installed, the number of hosts that are deleted and/or added during the specified period, a type and the number of ports that are used in the OT network 20, the number of communication devices having the DHCP server function, and the number of communication devices having performed communication for the given time or less.

Based on the number of communication devices of the business facility of the OT network 20 that is specified by the specifying unit 133, the estimator 134 estimates a scale of the business facility in which the OT network 20 is set. For example, the estimator 134 estimates a scale of the business facility with reference to a correspondence table associating a scale of the business facility with each set of the number of communication devices, or the like.

The evaluator 135 makes an evaluation on the communication environment of the OT network 20 based on the reference value that is set according to the business type and the scale of the business facility. The evaluator 135 makes an evaluation on any one, some, or all of the number of communication devices of the OT network, a type of an OS that is used by the communication device, the number of communication devices in which an OS of a version older than the given version is installed, the number of hosts that are deleted and/or added during the specified period, a type and the number of ports that are used in the OT network, the number of communication devices having the DHCP server function, and the number of communication devices having performed communication for the given time or less.

For example, with reference to Table 125-1 exemplified in FIG. 6, the evaluator 135 makes evaluations in stages in the order of A to F with respect to the above-described indices "1" to "6". In this case, using the results of specifying by the specifying unit 133, the specifying unit 133 calculates a ratio of communication devices in which an OS of a version older than the given version is installed, a ratio of hosts that are deleted and/or added during the specified period, and the number and the ratio of ports older than a given generation. The given period is an organization that is set as a period of evaluation on the OT network 20.

The evaluator 135 refers to parts corresponding to the business type and the scale of the business facility in which the OT network 20 to be evaluated is built in Table 125-1. The evaluator 135 compares the content that is specified by the specifying unit 133 and each of the evaluation references of A to F that are set with respect to each of the indices and determines which of A to E the evaluation is.

The case where the business facility to be evaluated is a food processing company with 120 employees will be described as an example. In this case, the evaluator 135 refers to the reference determination rules of the first to sixth rows corresponding to the business type of "food" and the scale of "100 to 500 people" in Table 125-1 and makes an evaluation with respect to each of the indices "1" to "6".

For example, when the total number of communication devices of the OT network 20 of the business facility is 32 and the number of PCs in which an OS older than the given version is installed is one, the evaluator 135 determines "A" with respect to the index "1". As for "the number and the ratio of hosts that are deleted or added during the specified period", for example, an evaluation is made based on the maximum value of the number of deleted hosts and the number of added hosts.

In the OT network 20 of the business facility, when the number of hosts that are deleted during the specified period is 16 and the number of hosts that are added is 11, the evaluator 135 makes an evaluation of "B" with respect to the index "2". When there are two types of ports older than the given generation, the evaluator 135 makes an evaluation of "C" with respect to the index "3". Similarly, as for the index "4" and the following indices, the evaluator 135 makes evaluations in six stages of A to F with reference to Table 125-1.

The generator 136 generates a report presenting the results of evaluations made by the evaluator 135. The generator 136 generates a report associating the result of each evaluation made by the evaluator 135 with respect to any one, some, or all the number of communication devices of the OT network 20, a type of an OS that is used by the communication device, the number of communication devices in which an OS of a version older than the given version is installed, the number of hosts that are deleted and/or added during the specified period, a type and the number of ports that are used in the OT network 20, the number of communication devices having the DHCP server function, and the number of communication devices having performed communication for the given time or less.

Specifically, the generator 136 generates a report in which the result of each evaluation made by the evaluator 135 is written in each item in Frame W1 as presented in Report 126-1 in FIG. 7. In the case of the example of the above-described food processing company with 120 employees, with respect to the index "1", the generator 136 writes "1" in the column of "number (devices)", writes "3.12" in the column of "ratio", and writes "A" in the column of "evaluation". Also with respect to other indices "2" to "6", similarly, the generator 136 writes the result of each evaluation made by the evaluator 135 and fills in each item of Frame 1.

As described above, the generator 136 does not generate a report in which the results of specifying by the specifying unit 133 are simply listed. The generator 136 generates a report obtained by specifying the content of each index and a risk assumed with respect to each index, extracting and writing the result of specifying relevant to each index, and furthermore writing the content of evaluation on the OT network 20 with respect to each index. The generator 136 outputs the generated report from the input-output unit 14. Alternatively, the generator 136 transmits the generated report to another device via the communication unit 11.

A person in charge of the OT network 20 is able to recognize an appropriate evaluation on the communication environment of the OT network 20 by only referring to this report. Each specifying result and evaluation result are written on the report in a state of being classified according to the indices and therefore the person in charge of management need not perform a process of analyzing the specifying results and evaluating the communication environment of the OT network 20 according to each set of content written in the index even when the person is not so familiar with IT and OT. Furthermore, the person in charge of management is able to check the risk assumed with respect to each index using the report and therefore is able to take a specific measure to avoid the risk based on the content presented in the index.

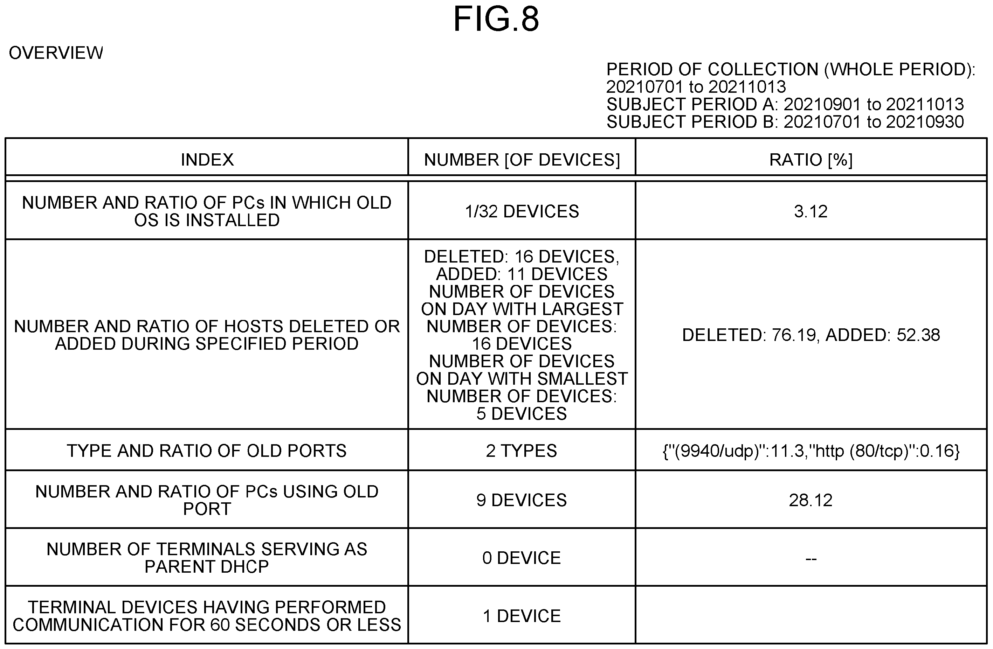

The generator 136 may add a detailed report exemplified in FIGS. 8 to 16 in addition to the report of Report 126-1 in FIG. 7. FIGS. 8 to 16 are diagrams illustrating examples of the detailed report.

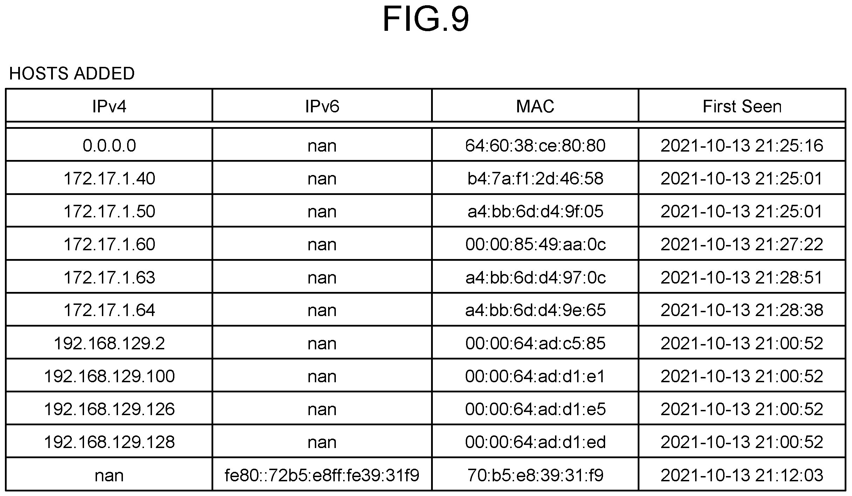

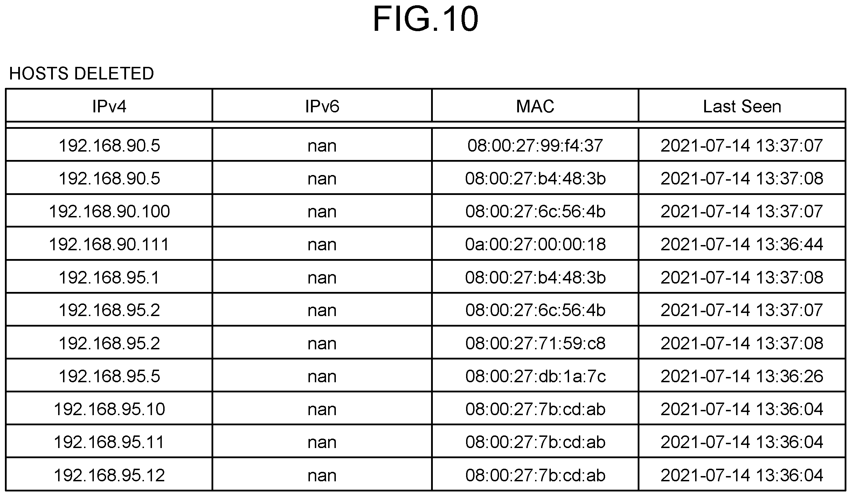

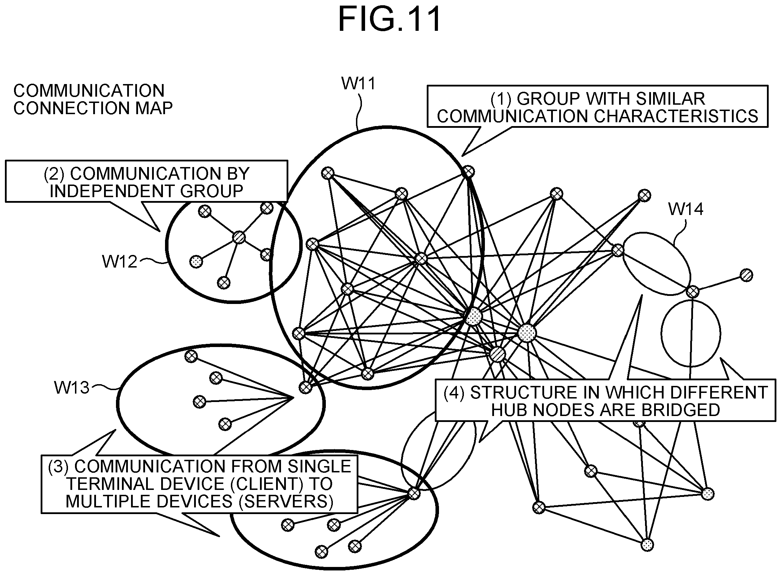

FIG. 8 presents an overview in which the period of evaluation is written together. FIG. 9 presents a list of hosts that are added in the period of evaluation. FIG. 10 presents a list of hosts that are deleted in the period of evaluation. FIG. 11 is a communication connection map that displays communications among communication devices by links using the communication devices as nodes. For example, in the example in FIG. 11, marks are made like Frames W11 to W14 such that a group with similar communication characteristics, communication by an independent group, communication from a single terminal device (client) to multiple devices (servers), a structure in which different hub nodes are bridged, etc., can be discriminated ((1) to (4) in FIG. 11).

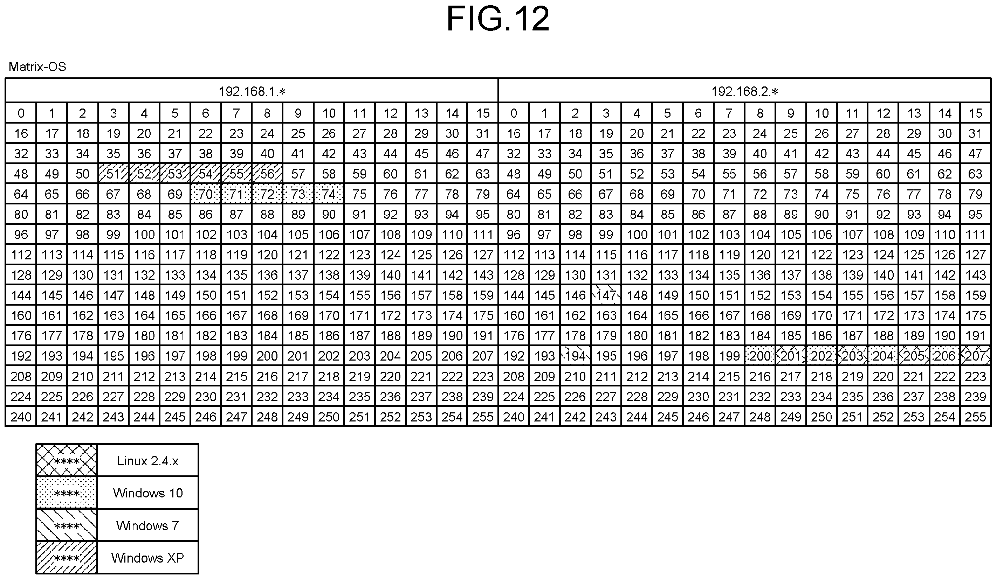

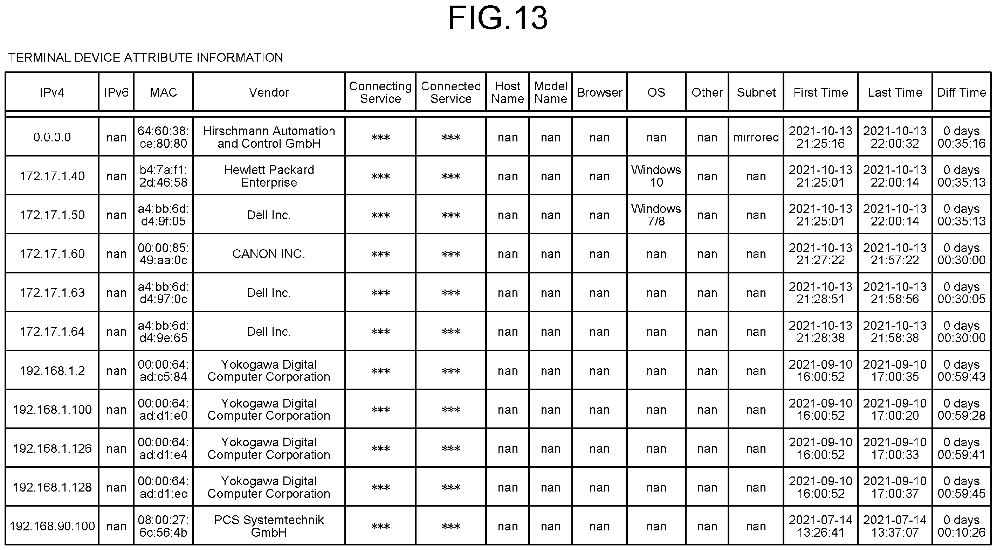

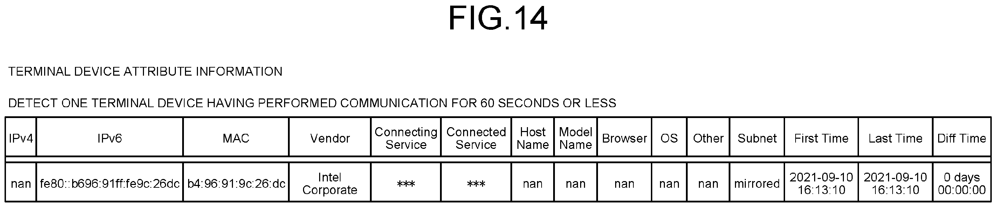

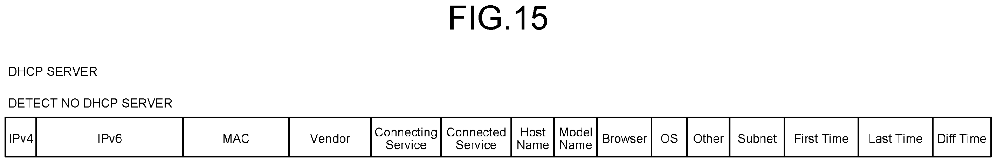

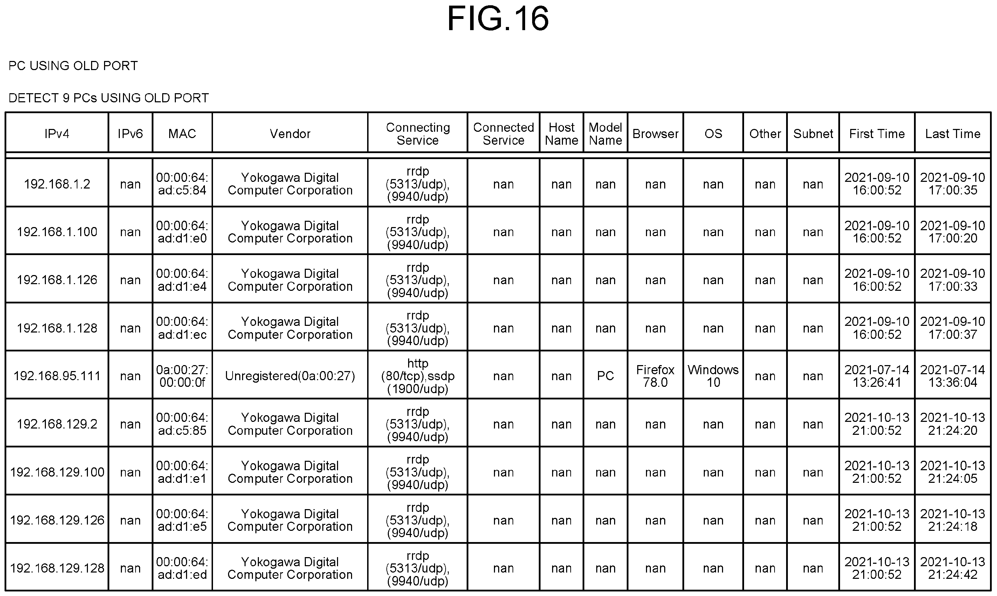

FIG. 12 is matrix data that is structured in a matrix form by coloring each cell according to the types of OS. In addition to this, there is matrix data displaying vender information and roles of communication devices. FIG. 13 presents a list of attribute information on each terminal device. FIG. 14 is a list of communication terminal devices having performed communication for 60 seconds or less. FIG. 15 is a list of communication devices having the DHCP server function. FIG. 16 is a list of terminal devices using an old port. The person in charge of managing the OT network 20 is able to recognize the details of the communication environment of the OT network 20 by checking the detailed report exemplified in FIGS. 8 to 16.

### Process Procedure of Processing Method

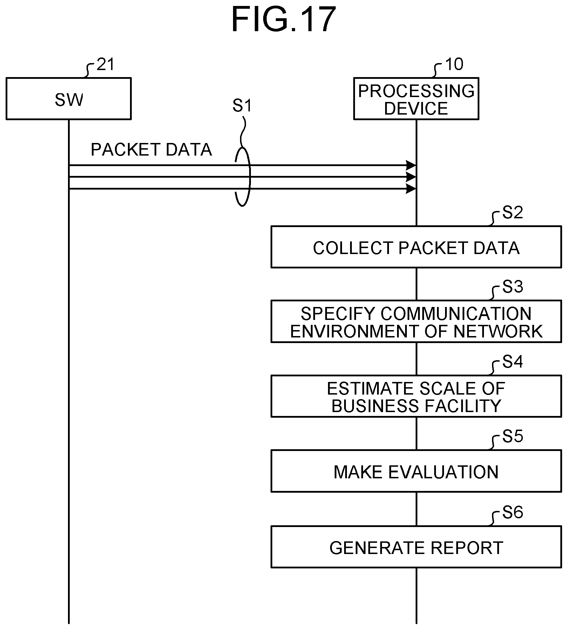

The processing method in the processing system according to the embodiment will be described next. FIG. 17 is a sequence chart illustrating an example of the process procedure of the processing method according to the embodiment.

As illustrated in FIG. 17, the processing device 10 receives an input of business type information on the business facility in which the OT network 20 on which an evaluation is to be made is built. By receiving packet data that is mirrored from the SW 21 of the OT network 20 (step S1), packet data of the OT network 20 is collected (step S2). The processing device 10 specifies a communication environment of the OT network 20 based on the packet data (step S3).

The processing device estimates a scale of the business facility on which an evaluation is to be made based on the number of communication devices of the OT network 20 (step S4). Note that, when scale information on the business facility is input together with business type information on the business facility on which an evaluation is to be made, the processing device 10 omits the process at step S4.

The processing device 10 makes an evaluation on the communication environment of the OT network 20 that is specified at step S3 based on a reference value that is set according to the business type and the scale of the business facility (step S5). The processing device 10 generates a report presenting a result of an evaluation that is made in the evaluation process (step S5) (step S6) and outputs the report.

### Effect of Embodiment

As described above, the processing device 10 according to the embodiment collects packet data of the OT network 20, specifies the communication environment of the OT network 20 based on the packet data, and specifies the communication environment of the OT network 20 based on the packet data. The processing device 10 then makes an evaluation on the communication environment of the OT network 20 based on the reference values that are set according to the business type and the scale of the business facility and generates a report presenting a result of the evaluation.

The person in charge of the OT network 20 thus is able to recognize the evaluation on the communication environment of the OT network 20 by only referring to this report. The report presents the result of evaluating the communication environment of the OT network 20 according to the business type and the scale of the business facility. The person in charge of the OT network 20 thus is able to recognize the evaluation that is determined appropriately according to the business type and the scale of the business facility by only referring to this report.

The processing device 10 makes an evaluation with respect to each index relevant to each of any one, some, or all of the number of communication devices of the OT network 20, a type of an OS that is used by the communication device, the number of communication devices in which an OS of a version older than the given version is installed, the number of hosts that are deleted and/or added during the specified period, a type and the number of ports that are used in the OT network, the number of communication devices having the DHCP server function, and the number of communication devices having performed communication for the given time or less.

Each specifying result and the evaluation result are written on the report in a state of being classified according to the indices. Thus, even when the person in charge of managing the OT network 20 is not familiar with IT and OT, the person need not perform the process of analyzing the specifying results and the process of evaluating the communication environment of the OT network 20 while classifying the content of the indices.

The evaluation results divided at stages of, for example, A to F are written on the report and therefore the person in charge of managing the OT network 20 is able to recognize what level the communication environment of the OT network 20 that the person manages is at compared to the communication environment of an OT network of another business facility of a similar business type and a similar scale. The processing device 10 writes the risk that is assumed according to each index in the report. This enables the person in charge of managing the OT network 20 to check the risk that is assumed with respect to each index using the report and thus take a specific measure to avoid the risk based on the content presented as the index.

### System Configuration, etc.

Each component of each device illustrated in the drawings is a functional idea and need not necessarily be configured physically as illustrated in the drawings. In other words, specific modes of distribution and integration of each device are not limited to those illustrated in the drawings and all or part of the devices can be configured by being functionally or physically distributed or integrated in any unit according to various types of load and usage. Furthermore, all or given part of each processing function implemented by each device can be realized by a CPU or a GPU and a program that is analyzed and executed by the CPU or the GPU (Graphics Processing Unit) or can be realized as hardware according to a wired logic.

Among the processes described in the embodiment, all or part of the process that is described as one performed automatically can be performed manually or all or part of the process that is described as one performed manually can be performed automatically by a known method. In addition to this, the process procedures, the control procedures, the specific names, and the information including various types of data and parameters that are presented in the description above and the drawings are changeable freely unless otherwise noted.

### Program

It is also possible to create a program in which the processes that the processing device 10 described in the above-described embodiment executes are written in a computer-executable language. For example, it is also possible to create a program in which the processes that the processing device 10 in the embodiment executes are written in a computer-executable language. In this case, a computer executes the program, thereby making it possible to obtain the same effect as that of the above-described embodiment. Furthermore, the program may be recorded in a computer-readable recording medium and a computer may be caused to read and execute the program that is recorded in the recording medium, thereby realizing the same processes as those of the above-described embodiment.

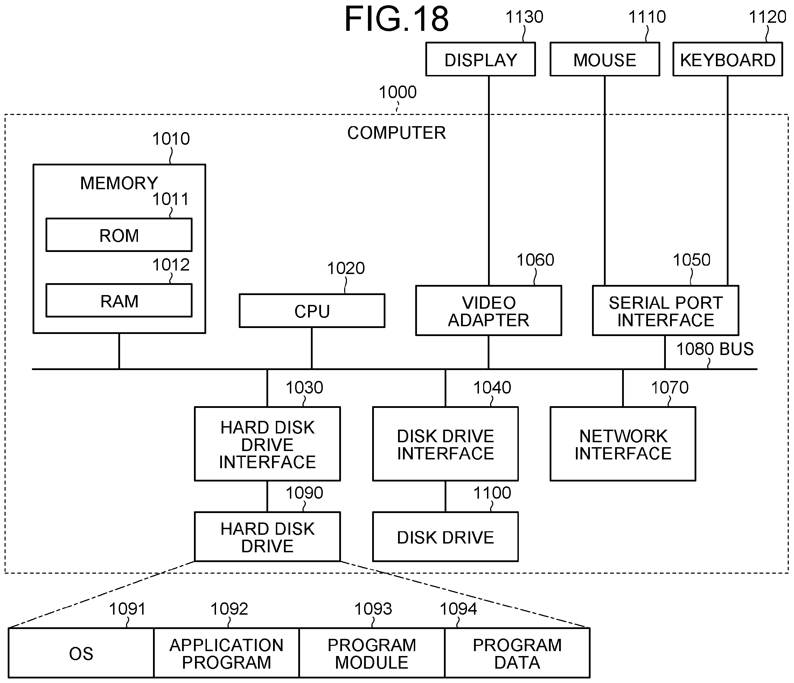

FIG. 18 is a diagram illustrating a computer that executes the program. As exemplified in FIG. 18, a computer 1000 includes, for example, a memory 1010, a CPU 1020, a hard disk drive interface 1030, a disk drive interface 1040, a serial port interface 1050, a video adapter 1060, and a network interface 1070 and each of these units is connected via a bus 1080.

As exemplified in FIG. 18, the memory 1010 includes a ROM (Read Only Memory) 1011 and a RAM 1012. The ROM 1011 stores, for example, a boot program, such as a BIOS (Basic Input Output System). As exemplified in FIG. 18, the hard disk drive interface 1030 is connected to a hard disk drive 1090. The disk drive interface 1040 is connected to a disk drive 1100. For example, a detachable recording medium, such as a magnetic disk or an optical disk, is inserted into the disk drive 1100. The serial port interface 1050 is connected to, for example, a mouse 1110 and a keyboard 1120. The video adapter 1060 is connected to, for example, a display 1130.

As exemplified in FIG. 18, the hard disk drive 1090 stores, for example, an OS 1091, an application program 1092, a program module 1093, and program data 1094. In other words, the above-described program is stored in, for example, the hard disk drive 1090 as a program module in which instructions to be executed by the computer 1000 are written.

The various types of data described in the above-described embodiment are stored in, for example, the memory 1010 and the hard disk drive 1090 as program data. The CPU 1020 reads the program module 1093 and the program data 1094 that are stored in the memory 1010 and the hard disk drive 1090 to the RAM 1012 as requested and executes various types of process procedure.

Note that the program module 1093 and the program data 1094 according to the program are not limited to being stored in the hard disk drive 1090, and the program module 1093 and the program data 1094 may be stored in, for example, a detachable storage medium and may be read by the CPU 1020 via the disk drive, or the like. Alternatively, the program module 1093 and the program data 1094 according to the program may be stored in another computer that is connected via a network (such as a LAN (Local Area Network) or a WAN (Wide Area Network) and may be read by the CPU 1020 via the network interface 1070.

As included in the technique that the present application discloses, the above-described embodiments and modifications thereof are included in the invention described in CLAIMS and equivalents of the invention.

### [Explanation of Reference]

- 10: PROCESSING DEVICE

- 11: COMMUNICATION UNIT
- 12: STORAGE UNIT
- 13: CONTROLLER
- 14: INPUT-OUTPUT UNIT
- 121: PACKET DATA GROUP
- 122: BUSINESS FACILITY DATA
- 123: REPORT GENERATION DATA
- 124: SPECIFIED DATA
- 125: EVALUATION DATA
- 126: REPORT DATA
- 131: RECEIVER
- 132: COLLECTOR
- 133: SPECIFYING UNIT
- 134: ESTIMATOR
- 135: EVALUATOR
- 136: GENERATOR

## Claims

1. A processing device comprising:
a collector configured to collect communication data of an OT (Operational Technology) network;
an acquisition unit configured to acquire information presenting a business type and a scale of a business facility in which the OT network is built;
a specifying unit configured to specify a communication environment of the OT network based on the communication data;
an evaluator configured to make an evaluation on the communication environment of the OT network based on a reference value that is set according to the business type and the scale of the business facility; and
a generator configured to generate a report presenting a result of the evaluation made by the evaluator.

2. The processing device according to claim 1, wherein
based on the communication data, the specifying unit specifies any one, some, or all of a number of communication devices of the OT network, a type of an OS (Operating System) that is used by the communication device, the number of communication devices in which an OS of a version older than a given version is installed, a number of hosts that are deleted and/or added during a specified period, a type and a number of ports that are used in the OT network, the number of the communication devices having a DHCP (Dynamic Host Configuration Protocol) server function, and the number of the communication devices having performed communication for a given time or less,
the evaluator makes an evaluation on any one, some, or all of the number of communication devices of the OT network, a type of an OS that is used by the communication device, the number of communication devices in which an OS of a version older than a given version is installed, the number of hosts that are deleted and/or added during a specified period, a type and the number of ports that are used in the OT network, the number of the communication devices having a DHCP server function, and the number of the communication devices having performed communication for a given time or less, and
the generator generates a report associating a result of each evaluation made by the evaluator on any one, some, or all of the number of communication devices of the OT network, a type of an OS that is used by the communication device, the number of communication devices in which an OS of a version older than a given version is installed, the number of hosts that are deleted and/or added during a specified period, a type and the number of ports that are used in the OT network, the number of the communication devices having a DHCP server function, and the number of the communication devices having performed communication for a given time or less.

3. The processing device according to claim 2, further including an estimator configured to estimate a scale of the business facility based on the number of communication device of the OT network.

4. The processing device according to claim 2 or 3, wherein each reference value is set according to the business type of the business facility and the scale of the business facility with respect to each of any one, some, or all of the number of communication devices of the OT network, a type of an OS that is used by the communication device, the number of communication devices in which an OS of a version older than a given version is installed, the number of hosts that are deleted and/or added during a specified period, a type and the number of ports that are used in the OT network, the number of the communication devices having a DHCP server function, and the number of the communication devices having performed communication for a given time or less.

5. The processing device according to any one of claims 2 to 4, wherein the generator generates a report associating, with the result of each evaluation made by the evaluator, content presenting a risk that is assumed with respect to any one, some, or all of the number of communication devices of the OT network, a type of an OS that is used by the communication device, the number of communication devices in which an OS of a version older than a given version is installed, the number of hosts that are deleted and/or added during a specified period, a type and the number of ports that are used in the OT network, the number of the communication devices having a DHCP server function, and the number of the communication devices having performed communication for a given time or less.

6. A processing method that a processing device executes, the processing method comprising:
a process of collecting communication data of an OT (Operational Technology) network;
a process of acquiring information presenting a business type and a scale of a business facility in which the OT network is built;
a process of specifying a communication environment of the OT network based on the communication data;
a process of making an evaluation on the communication environment of the OT network based on a reference value that is set according to the business type and the scale of the business facility; and
a process of generating a report presenting a result of the evaluation made in the process of making an evaluation.

7. A processing program that causes a computer to execute:
a step of collecting communication data of an OT (Operational Technology) network;
a step of acquiring information presenting a business type and a scale of a business facility in which the OT network is built;
a step of specifying a communication environment of the OT network based on the communication data;
a step of making an evaluation on the communication environment of the OT network based on a reference value that is set according to the business type and the scale of the business facility; and
a step of generating a report presenting a result of the evaluation made in the step of making an evaluation.
